# EUROPÄISCHE PATENTANMELDUNG

(11) **EP 4 813 184 A1**
(43) Veröffentlichungstag der Anmeldung: **30.09.2026**
(21) Anmeldenummer: 26162069.4
(22) Anmeldetag: 03.03.2026
(51) Int. Cl.: A01B 63/10, A01B 73/02, A01B 73/04, A01D 7/00, F16H 21/00

(54) **LANDMASCHINE, AUFWEISEND EINE SCHALTANORDNUNG**

(30) Priorität: 24.03.2025 DE 102025111283
(71) Anmelder: Maschinenfabrik Bernard Krone GmbH & Co. KG, 48480 Spelle (DE)
(72) Erfinder: Afting, Andreas, 48488 Emsbüren (DE); Helper, Erik, 48465 Quendorf (DE); Lütkeharmöller, Raphael, 49809 Lingen (DE)

(57) **Zusammenfassung**

Die Erfindung betrifft eine Landmaschine (1), aufweisend eine Schaltanordnung (10) mit einem ersten Maschinenteil (11) sowie einem zweiten Maschinenteil (12), wobei die Maschinenteile (11, 12) in einer Verstellrichtung (V) gegeneinander verstellbar sind und wobei der zweite Maschinenteil (12) ein Kurvenbahnelement (14) aufweist, mit einem hinteren Bahnabschnitt (14.1) und einem demgegenüber in Verstellrichtung (V) vorderen Bahnabschnitt (14.2), der in einer zur Verstellrichtung (V) senkrechten Auslenkrichtung (L) nach außen gegenüber dem hinteren Bahnabschnitt (14.1) vorspringt, wobei am ersten Maschinenteil (11) eine Schalteinheit (15) angeordnet ist, mit einem Steuerelement (16), das gegenüber dem ersten Maschinenteil (11) zwischen einem ersten Steuerzustand (T1) und einem zweiten Steuerzustand (T2) verstellbar ist, wobei die Steuerzustände (T1, T2) unterschiedlichen Schaltzuständen der Schalteinheit (15) entsprechen, und wobei bei einer Rückstellbewegung (BR) der Maschinenteile (11, 12) das Steuerelement (16) rückwärts entlang des vorderen Bahnabschnitts (14.2) im zweiten Steuerzustand (T2) führbar ist und nachfolgend entlang des hinteren Bahnabschnitts (14.1) im ersten Steuerzustand (T1) führbar ist, so dass ein Übergang zum ersten Steuerzustand (T1) erfolgt, wenn das zweite Maschinenteil (12) relativ zum ersten Maschinenteil (11) in einem Kurvenbahn-Schaltbereich (S1) angeordnet ist. Um eine richtungsabhängig unterschiedliche Koordination von Verstellvorgängen einer Landmaschine zu ermöglichen, ist erfindungsgemäß vorgesehen, dass am zweiten Maschinenteil (12) ein gegenüber dem Kurvenbahnelement (14) verstellbares Umlenkelement (22) angeordnet ist, welches dazu eingerichtet ist, bei einer zur Rückstellbewegung (BR) entgegengesetzten Vorstellbewegung (BV) das Steuerelement (16) derart auszulenken, dass ein Übergang zum ersten Steuerzustand (T1) erfolgt, wenn das zweite Maschinenteil (12) relativ zum ersten Maschinenteil (11) in einem Umlenkungs-Schaltbereich (S2) angeordnet ist, welcher gegenüber dem Kurvenbahn-Schaltbereich (S1) versetzt ist.

## Beschreibung

Die vorliegende Erfindung betrifft eine Landmaschine nach dem Oberbegriff von Anspruch 1 sowie eine Schaltanordnung nach dem Oberbegriff von Anspruch 15.

Bei Landmaschinen unterschiedlicher Art müssen in verschiedenen Situationen die Bewegungen mehrerer Komponenten miteinander koordiniert werden. Dies betrifft beispielsweise den Wechsel zwischen einer Arbeitsposition und einer Vorgewendeposition. Landmaschinen wie Kreiselschwader oder Kreiselzettwender weisen einen oder mehrere Tragarme auf, die beweglich mit einem Hauptrahmen verbunden sind. An dem jeweiligen Tragarm ist wiederum wenigstens ein Bearbeitungsorgan angeordnet, das seinerseits gegenüber dem Tragarm beweglich ist. Wird beim Wechsel in die Vorgewendeposition der Tragarm angehoben, ist u.U. auch eine Verstellung des Bearbeitungsorgans gegenüber dem Tragarm nötig, namentlich um zu verhindern, dass die Bearbeitungsorgane auf dem Boden aufsetzen. Die zeitliche Koordination der beiden Verstellvorgänge wird zum einen dadurch erschwert, dass regelmäßig ein zeitlicher Versatz notwendig ist, z.B. derart, dass das Anheben des Tragarms beginnt, wonach zeitverzögert das Verstellen des Bearbeitungsorgans einsetzt. Umgekehrt kann das Absenken des Tragarms noch fortgeführt werden, wenn das Verstellen des Bearbeitungsorgans bereits abgeschlossen ist. Man kann davon sprechen, dass die Schaltzeitpunkte der Aktoren für den Tragarm einerseits und für das Bearbeitungsorgan andererseits zueinander versetzt sind. Eine weitere, wesentliche Problematik besteht darin, dass hinsichtlich des Anhebens und des Absenkens ein unterschiedlicher Versatz der Schaltzeitpunkte notwendig sein kann. Dies kann z.B. an unterschiedlich wirkenden Gewichtskräften, an Trägheitskräften oder an unterschiedlichen Hydraulikdrücken in den beteiligten Aktoren liegen. Eine im Stand der Technik bekannte Möglichkeit der Steuerung besteht darin, eine Kurvenbahn starr an den Tragarm zu koppeln, wobei ein Steuerhebel, der am Hauptrahmen angeordnet ist, durch die Kurvenbahn auslenkbar auf ein Hydraulikventil wirkt, welches die Auslenkung des Bearbeitungsorgans steuert. Dieser Mechanismus ist zuverlässig und robust, erlaubt aber keine Einstellung unterschiedlicher Schaltzeitpunkte beim Anheben und Absenken.

Aufgabe der Erfindung ist es, eine richtungsabhängig unterschiedliche Koordination von Verstellvorgängen einer Landmaschine zu ermöglichen.

Die Aufgabe wird gelöst mit einer Landmaschine mit den Merkmalen des unabhängigen Patentanspruchs 1. Vorteilhafte Ausführungsformen sind den abhängigen Ansprüchen entnehmbar.

Dafür wird eine Landmaschine geschaffen, aufweisend eine Schaltanordnung mit einem ersten Maschinenteil sowie einem zweiten Maschinenteil, wobei die Maschinenteile in einer Verstellrichtung gegeneinander verstellbar sind und wobei der zweite Maschinenteil ein Kurvenbahnelement aufweist, mit einem hinteren Bahnabschnitt und einem in Verstellrichtung demgegenüber vorderen Bahnabschnitt, der in einer zur Verstellrichtung senkrechten Auslenkrichtung nach außen gegenüber dem hinteren Bahnabschnitt vorspringt, wobei am ersten Maschinenteil eine Schalteinheit angeordnet ist, mit einem Steuerelement, das gegenüber dem ersten Maschinenteil zwischen einem ersten Steuerzustand und einem zweiten Steuerzustand verstellbar ist, wobei die Steuerzustände unterschiedlichen Schaltzuständen der Schalteinheit entsprechen, und wobei bei einer Rückstellbewegung der Maschinenteile das Steuerelement rückwärts entlang des vorderen Bahnabschnitts im zweiten Steuerzustand führbar ist und nachfolgend entlang des hinteren Bahnabschnitts im ersten Steuerzustand führbar ist, so dass ein Übergang zum ersten Steuerzustand erfolgt, wenn das zweite Maschinenteil relativ zum ersten Maschinenteil in einem Kurvenbahn-Schaltbereich angeordnet ist.

Die Landmaschine kann auch als landwirtschaftliche Arbeitsmaschine bezeichnet werden. Die Landmaschine ist zur Feldbearbeitung vorgesehen, bspw. zum Pflügen, Düngen, Mähen, Zetten, zur Erntegutaufnahme oder dergleichen. Entsprechend kann sie z.B. als Mähwerk, Schwader, Zettwender, Pflug, Grubber oder dergleichen ausgebildet sein. Allerdings muss sie nicht für eine spezifische Art von Feldbearbeitung eingerichtet sein, sondern kann insbesondere durch Kombination mit einem geeigneten Anbaugerät für unterschiedliche Arten von Feldbearbeitung nutzbar sein. Es könnte sich bei der Landmaschine um einen Anhänger ohne eigenen Fahrantrieb handeln. Auch kann die Landmaschine selbst als Anbaugerät ausgebildet sein, welches dazu vorgesehen ist, an einen Schlepper angekoppelt zu werden. Die Landmaschine kann einen eigenen Fahrantrieb aufweisen, der sie bei der Feldbearbeitung antreibt. In diesem Fall kann sie als autonomes Fahrzeug ausgebildet sein, welches dazu eingerichtet ist, eine Feldbearbeitung ohne Steuerkommandos eines Fahrers oder Bedieners durchzuführen. Alternativ kann die Landmaschine einen Führungsstand oder eine Fahrerkabine aufweisen und zumindest bedarfsweise von einem Fahrer steuerbar sein.

Die Schaltanordnung ist in ihrer Gesamtheit dazu vorgesehen, unterschiedliche Schaltzustände herzustellen. Sie kann zur Ansteuerung unterschiedlicher Komponenten der Landmaschine, insbesondere von Aktoren, genutzt werden, wobei jeder Schaltzustand einem bestimmten Zustand der angesteuerten Komponente entspricht. Z.B. kann ein Schaltzustand einer Deaktivierung entsprechen und ein anderer Schaltzustand einer Aktivierung. Der erste Maschinenteil und der zweite Maschinenteil sind Teile der Landmaschine, die beweglich miteinander verbunden sind. Sie sind gegeneinander verstellbar, wobei einer der beiden Maschinenteile (insbesondere der erste Maschinenteil) bezüglich eines Hauptrahmens der Landmaschine und/oder bezüglich eines äußeren Bezugsystems stationär gehalten sein kann. Es ist aber auch möglich, beide Maschinenteile diesbezüglich beweglich sind. Bevorzugt ist jeder Maschinenteil in sich starr ausgebildet. Die beiden Maschinenteile können eine tragende Funktion haben, so dass sie z.B. zur mechanischen Stabilisierung der Landmaschine und/oder zur Aufhängung anderer Komponenten der Landmaschine dienen. Die Bewegungsrichtung der beiden Maschinenteile relativ zueinander wird hier und im Folgenden als Verstellrichtung bezeichnet. Die Maschinenteile müssen nicht geradlinig gegeneinander verstellbar sein, so dass sich eine lokal unterschiedliche Verstellrichtung ergeben kann.

Der zweite Maschinenteil weist ein Kurvenbahnelement auf, mit einem hinteren Bahnabschnitt und einem in Verstellrichtung demgegenüber vorderen Bahnabschnitt, der in einer zur Verstellrichtung senkrechten Auslenkrichtung nach außen gegenüber dem hinteren Bahnabschnitt vorspringt. Das Kurvenbahnelement ist bevorzugt in sich starr ausgebildet. Das Kurvenbahnelement weist eine Kurvenbahn auf, die zur Führung des nachfolgend noch erläuterten Steuerelements dient. Dabei resultiert die Führung aus der Verstellung der beiden Maschinenteile gegeneinander. Die Kurvenbahn kann insbesondere durch eine Außenfläche oder Randfläche des Kurvenbahnelements gebildet sein, sie könnte allerdings auch durch eine innenliegende Struktur wie eine Führungsnut oder einen Führungsschlitz gebildet sein. Das Kurvenbahnelement weist einen hinteren Bahnabschnitt auf sowie einen vorderen Bahnabschnitt, der in Verstellrichtung gesehen vor dem hinteren Bahnabschnitt angeordnet ist. "Vorne" und "hinten" sowie "vorwärts" und "rückwärts" sowie bezeichnen hier und im Folgenden entgegengesetzte Richtungen bezüglich der Verstellrichtung. Die Begriffe dienen nur zur Unterscheidung und sind nicht einschränkend auszulegen. Die beiden Bahnabschnitte können unmittelbar aneinander angrenzen, es könnte aber auch ein weiterer Abschnitt, der als Übergangsabschnitt bezeichnet werden kann, zwischen Ihnen zwischengeordnet sein. Der vordere Bahnabschnitt springt gegenüber dem hinteren Bahnabschnitt nach außen vor, und zwar in einer Auslenkrichtung, die senkrecht zur Verstellrichtung verläuft. Man kann auch sagen, dass der vordere Bahnabschnitt gegenüber dem hinteren Bahnabschnitt in Auslenkrichtung nach außen versetzt ist. Auch die Begriffe "außen" und "innen" bezeichnen lediglich Richtungen bezüglich der Auslenkrichtung und dienen insofern nur zur Unterscheidung. Ihre Bedeutung hängt von der Auslenkungsrichtung ab, die wiederum im Zusammenhang mit der Verstellrichtung steht und daher auch lokal unterschiedlich sein kann.

Am ersten Maschinenteil ist eine Schalteinheit angeordnet, mit einem Steuerelement, das gegenüber dem ersten Maschinenteil zwischen einem ersten Steuerzustand und einem zweiten Steuerzustand verstellbar ist, wobei die Steuerzustände unterschiedlichen Schaltzuständen der Schalteinheit entsprechen. Die Schalteinheit kann zur Ansteuerung unterschiedlicher Funktionen der Landmaschine genutzt werden. Insbesondere kann die Schalteinheit wenigstens einen Aktor der Landmaschine ansteuern. Jeder Steuerzustand kann genau einer Position des Steuerelements entsprechen, oder jeder Steuerzustand kann einem Positionsbereich entsprechen. In jedem Fall unterscheidet entsprechen der ersten und zweite Steuerzustand unterschiedlichen Schaltzuständen der Schalteinheit. Man kann dem ersten Steuerzustand einen ersten Schaltzustand zuordnen und dem zweiten Steuerzustand einen zweiten Schaltzustand. Entsprechend dem Steuerzustand sowie dem Schaltzustand ändert sich wiederum der Zustand einer durch die Schalteinheit angesteuerten Komponente. Beispielsweise kann ein angesteuerter Aktor im ersten Steuerzustand passiv geschaltet sein und im zweiten Steuerzustand aktiv, oder er kann im ersten Steuerzustand eingefahren werden und im zweiten Steuerzustand ausgefahren werden.

Das Steuerelement ist bei einer Rückstellbewegung der Maschinenteile rückwärts entlang des vorderen Bahnabschnitts im zweiten Steuerzustand führbar und ist nachfolgend entlang des hinteren Bahnabschnitts im ersten Steuerzustand führbar, so dass ein Übergang zum ersten Steuerzustand erfolgt, wenn das zweite Maschinenteil relativ zum ersten Maschinenteil in einem Kurvenbahn-Schaltbereich angeordnet ist. Das Steuerelement wirkt mit dem Kurvenbahnelement zusammen, so dass es je nach Relativposition der beiden Maschinenteile an einem der beiden Bahnabschnitte anliegt. Bei einer Rückstellbewegung der Maschinenteile bewegt sich das Steuerelement relativ zum Kurvenbahnelement rückwärts, also wenigstens anteilig entgegen der Verstellrichtung. Dabei ist es entlang des vorderen Bahnabschnitts, der nach außen vorspringt, im zweiten Steuerzustand führbar. Hierbei kann das Steuerelement bevorzugt durchgehend am ersten Bahnabschnitt geführt sein. Bewegt sich das Steuerelement weiter rückwärts, ist es entlang des hinteren Bahnabschnitts, der gegenüber dem vorderen Bahnabschnitt nach innen versetzt ist, im ersten Steuerzustand führbar. D.h. jeder der Bahnabschnitte bildet eine Führung für das Steuerelement, die einem der Steuerzustände entspricht. Der Übergang vom zweiten Steuerzustand zum ersten Steuerzustand erfolgt, wenn das zweite Maschinenteile relativ zum ersten Maschinenteil in einem Positionsbereich angeordnet ist, der durch das Kurvenbahnelement festgelegt ist und der hier als Kurvenbahn-Schaltbereich bezeichnet wird. In einigen Ausführungsformen kann dieser Bereich so eng definiert sein, dass man von einem Kurvenbahn-Schaltpunkt oder einer Kurvenbahn-Schaltposition sprechen kann.

Erfindungsgemäß ist am zweiten Maschinenteil ein gegenüber dem Kurvenbahnelement verstellbares Umlenkelement angeordnet, welches dazu eingerichtet ist, bei einer zur Rückstellbewegung entgegengesetzten Vorstellbewegung das Steuerelement derart auszulenken, dass ein Übergang zum ersten Steuerzustand erfolgt, wenn das zweite Maschinenteil relativ zum ersten Maschinenteil in einem Umlenkungs-Schaltbereich angeordnet ist, welcher gegenüber dem Kurvenbahn-Schaltbereich versetzt ist. Das Umlenkelement ist bevorzugt in sich starr ausgebildet, wenngleich es in einigen Ausführungsformen eine nichtvernachlässigbare Elastizität aufweisen könnte. Es ist gegenüber dem Kurvenbahnelement verstellbar und kann insbesondere am Kurvenbahnelement gelagert sein. Die Beweglichkeit kann translatorischer und/oder rotatorischer Art sein. Bevorzugt ist genau ein Freiheitsgrad des Umlenkelements gegenüber dem Kurvenbahnelement vorgesehen. Bei der Vorstellbewegung der Maschinenteile bewegt sich das Steuerelement relativ zum Kurvenbahnelement vorwärts, also wenigstens anteilig in Verstellrichtung. Das Umlenkelement ist dazu eingerichtet, bei der Vorstellbewegung, die entgegengesetzt zur o.g. Rückstellbewegung verläuft, mit dem Steuerelement zusammenzuwirken, also mechanisch mit diesem zusammenzuwirken. Bei der oben beschriebenen Rückstellbewegung ermöglicht das Umlenkelement den durch das Kurvenbahnelement bestimmten Übergang im Kurvenbahn-Schaltbereich. Bei der umgekehrten Vorstellbewegung hingegen führt das Zusammenwirken des Steuerelements mit dem Umlenkelement zu einer Verschiebung des Übergangs. Der Übergang vom ersten Schaltzustand zum zweiten Schaltzustand erfolgt nicht dann, wenn das zweite Maschinenteil im Kurvenbahn-Schaltbereich angeordnet ist, sondern im Umlenkungs-Schaltbereich, der zum Kurvenbahn-Schaltbereich versetzt ist. Der Übergang erfolgt früher, noch bevor das Steuerelement den vorderen Bahnabschnitt erreicht. Die Wirkung des Umlenkelements und die hieraus resultierende Verstellung des Steuerelements sind somit richtungsabhängig oder pfadabhängig. Es gibt somit nicht einen einzelnen Schaltbereich oder Schaltpunkt, an welchem der Übergang zwischen den Steuerzuständen und den hiermit verbundenen Schaltzuständen erfolgt, sondern einen Schaltbereich (den Umlenkungs-Schaltbereich) bei der Vorstellbewegung und einen anderen Schaltbereich (den Kurvenbahn-Schaltbereich) bei der Rückstellbewegung. Die Schaltanordnung realisiert die unterschiedlichen, pfadabhängigen Schaltbereiche mit mechanischen Mitteln und ist daher sehr robust und zuverlässig.

Die Landmaschine kann bevorzugt als Heuwerbungsmaschine ausgebildet sein. Dieser Begriff ist nicht einschränkend dahingehend auszulegen, dass ausschließlich eine Bearbeitung von Heu vorgesehen ist. Allgemein kann eine derartige Heuwerbungsmaschine zum Wenden, Umverteilen, Umlagern und/oder Schwaden unterschiedlicher Arten von am Boden liegendem Erntegut vorgesehen sein, z.B. Heu, Gras, Stroh, Luzerne oder dergleichen. Insbesondere kann es sich bei der Landmaschine um einen Schwader oder Zettwender handeln, beispielsweise einen Kreiselschwader oder Kreiselzettwender.

Wie bereits erwähnt, können die beiden Maschinenteile wenigstens anteilig translatorisch gegeneinander verstellbar sein. Eine bevorzugte Ausführungsform sieht allerdings vor, dass der zweite Maschinenteil gegenüber dem ersten Maschinenteil um eine Maschinenteil-Schwenkachse schwenkbar ist, wobei die Verstellrichtung tangential und die Auslenkrichtung radial bezüglich der Maschinenteil-Schwenkachse verläuft. Bezogen auf den zusammengebauten Zustand und den bestimmungsgemäßen Einsatz der Landmaschine kann die Maschinenteil-Schwenkachse insbesondere wenigstens anteilig horizontal verlaufen, also z.B. in einem Winkel von höchstens 30° zur horizontalen Ebene. Insofern kann das Schwenken des zweiten Maschinenteils gegenüber dem ersten Maschinenteil als Aufwärts- oder Abwärtsschwenken beschrieben werden. Es sind allerdings auch sinnvolle Anwendungen denkbar, bei denen die Maschinenteil-Schwenkachse einen wesentlich anderen Verlauf aufweist.

Einer der Maschinenteile kann insbesondere wenigstens einen Teil eines Hauptrahmens der Landmaschine aufweisen und der andere Maschinenteil kann wenigstens einen Teil eines Tragarms aufweisen, welcher zum Tragen wenigstens eines Bearbeitungsorgans ausgebildet ist. Der Hauptrahmen trägt wesentlich dazu bei, der Landmaschine mechanische Stabilität zu verleihen. Am Hauptrahmen kann ein Fahrwerk angeordnet sein, eine Kopplungsvorrichtung zur Verbindung mit einem Schlepper, oder andere Komponenten. Insbesondere kann die Gewichtskraft verschiedener Komponenten der Landmaschine vom Hauptrahmen aufgenommen werden, d.h. diese Komponenten können über den Hauptrahmen abgestützt sein, entweder vollständig oder anteilig. Insbesondere kann wenigstens ein Bearbeitungsorgan über einen Tragarm mit dem Hauptrahmen verbunden sein. Das Bearbeitungsorgan kann optional gegenüber dem Tragarm antreibbar sein, z.B. rotatorisch wie ein Rechkreisel eines Kreiselschwaders oder Kreiselzettwenders. Ein derartiger Tragarm, der auch als Auslegerarm bezeichnet werden kann, kann insbesondere schwenkbar mit dem Hauptrahmen verbunden sein. Durch Schwenken des Tragarms kann z.B. eine Bodenfreiheit des Bearbeitungsorgans angepasst werden. Insbesondere kann der Tragarm zwischen einer Bearbeitungsposition und einer Vorgewendeposition verstellbar sein, wobei in letzterer das Bearbeitungsorgan angehoben ist, um einen Kontakt mit Boden oder Vegetation zu vermeiden. Die Schaltanordnung kann genutzt werden, um unterschiedliche Vorgänge mit dem Schwenkvorgang des Tragarms zu koordinieren. Insbesondere kann die Schaltanordnung wenigstens einen über die Schalteinheit ansteuerbaren Aktor zum Verstellen des Bearbeitungsorgans gegenüber dem Tragarm aufweisen. Der entsprechende Aktor kann das Bearbeitungsorgan (z.B. den Rechkreisel) gegenüber dem Tragarm translatorisch und/oder rotatorisch verstellen. Das Verstellen des Bearbeitungsorgans kann verhindern, dass beim Verstellen des Tragarms Teile des Bearbeitungsorgans in Bodenkontakt geraten. Die Vorstellbewegung kann beim Verstellen in die Vorgewendeposition erfolgen, während die Rückstellbewegung beim Verstellen in die Arbeitsposition erfolgt.

Gemäß einer Ausführungsform weist die Schalteinheit ein Schaltelement auf, mit welchem das Steuerelement in wenigstens einem der Steuerzustände zusammenwirkt. D.h., das Steuerelement wirkt in wenigstens einem Steuerzustand auf das Schaltelement ein, was sich insbesondere auf eine mechanische Einwirkung bezieht. Das Steuerelement kann das Schaltelement in wenigstens einem Steuerzustand mit einer Kraft beaufschlagen. Umgekehrt ist es auch möglich, dass das Schaltelement seinerseits das Steuerelement mit einer Kraft beaufschlagt. Eine derartige Kraft kann wenigstens anteilig dazu beitragen, das Steuerelement in Richtung auf den ersten Steuerzustand vorzuspannen. Durch die Wechselwirkung mit dem Umlenkelement kann eine entgegengerichtete Kraft auf das Steuerelement erzeugt werden, die die Kraft seitens des Schaltelements überwindet. Die Schaltzustände der Schalteinheit können bei dieser Ausführungsform auch als Schaltzustände des Schaltelements angesehen werden. Das Schaltelement kann insbesondere dazu ausgebildet sein, wenigstens einen o.g. Aktor anzusteuern, wobei jeder Schaltzustand einer bestimmten Ansteuerung des Aktors entspricht. Das Schaltelement kann bevorzugt als Hydraulikventil, Pneumatikventil oder elektrischer Schalter ausgebildet sein. Die Ausgestaltung des Schaltelements korrespondiert selbstverständlich mit der Ausgestaltung des anzusteuernden Aktors. Im Falle eines elektrischen Aktors ist das Schaltelement vorteilhaft als elektrischer Schalter ausgebildet, im Falle eines hydraulischen Aktors als Hydraulikventil, und im Falle eines pneumatischen Aktors als Pneumatikventil.

Vorteilhaft ist das Umlenkelement quer zur Verstellrichtung gegenüber dem Kurvenbahnelement versetzt angeordnet und das Steuerelement weist einen Hauptabschnitt zum Zusammenwirken mit dem Kurvenbahnelement auf sowie einen Seitenabschnitt, welcher quer zur Verstellrichtung vom Hauptabschnitt abragt und zum Zusammenzuwirken mit dem Umlenkelement eingerichtet ist. Das Umlenkelement ist quer zur Verstellrichtung sowie bevorzugt quer zur Auslenkrichtung gegenüber dem Kurvenbahnelement versetzt angeordnet. Die Richtung des Versatzes, die auch als Versatzrichtung bezeichnet werden kann, verläuft im Fall einer schwenkbaren Verstellbarkeit der Maschinenteile in Richtung der Maschinenteil-Schwenkachse. Bezüglich dieser Versatzrichtung ist das Umlenkelement neben dem Kurvenbahnelement angeordnet. Es kann optional am Kurvenbahnelement geführt sein, z.B. über einen Führungsstift, der in ein Langloch oder eine Nut im Kurvenbahnelement eingreift. Das Steuerelement weist einen Hauptabschnitt auf, der mit dem Kurvenbahnelement zusammenwirkt und je nach Position mit dem ersten oder dem zweiten Bahnabschnitt zusammenwirken kann. Der Seitenabschnitt ist mit dem Hauptabschnitt verbunden und ragt von diesem ab. Genauer gesagt kann er in Versatzrichtung vom Hauptabschnitt abragen. Auf diese Weise kann er mit dem versetzt zum Kurvenbahnelement angeordneten Umlenkelement zusammenwirken. Der Seitenabschnitt kann beispielsweise als Stift ausgebildet sein, der mit dem Hauptabschnitt verbunden ist. Der Begriff "Hauptabschnitt" ist nicht einschränkend auszulegen, allerdings kann dieser Hauptabschnitt bevorzugt den Seitenabschnitt hinsichtlich Volumen und/oder Masse übertreffen. Der Seitenabschnitt kann starr mit dem Hauptabschnitt verbunden sein. Er könnte aber beispielsweise auch wenigstens teilweise drehbar am Hauptabschnitt gelagert sein.

In einigen Ausführungsformen kann das Umlenkelement translatorisch verstellbar am zweiten Maschinenteil angeordnet sein. In diesem Fall kann das Umlenkelement auch als Umlenkschieber bezeichnet werden. Eine bevorzugte Ausgestaltung sieht allerdings vor, dass das Umlenkelement als Umlenkhebel ausgebildet ist, welcher um eine Umlenkhebel-Schwenkachse gegenüber dem zweiten Maschinenteil schwenkbar ist. Die Umlenkhebel-Schwenkachse verläuft bevorzugt parallel zur o.g. Maschinenteil-Schwenkachse. Der Umlenkhebel kann einen Umlenkarm aufweisen, welcher zum Zusammenwirken mit dem Steuerelement ausgebildet ist, sowie einen Führungsarm, der dem Umlenkarm bezüglich der Umlenkhebel-Schwenkachse gegenüberliegend angeordnet ist. Dieser Führungsarm kann am Kurvenbahnelement geführt sein, z.B. in einer oben beschriebenen Führungsnut oder einem Führungsschlitz. Alternativ oder zusätzlich kann das Steuerelement als Steuerhebel ausgebildet sein, welcher um eine Steuerhebel-Schwenkachse gegenüber dem ersten Maschinenteil schwenkbar ist. Die Steuerhebel-Schwenkachse verläuft ebenfalls bevorzugt parallel zur Maschinenteil-Schwenkachse. Alternativ kann das Steuerelement aber auch translatorisch verstellbar mit dem ersten Maschinenteil verbunden sein.

In einigen Ausführungsformen kann das Umlenkelement bei der Vorstellbewegung stationär bleiben. Bei einer solchen Ausführungsform weist das Umlenkelement keinen Freiheitsgrad auf, der mit der zwischen Umlenkelement und Steuerelement wirkenden Kraft übereinstimmt. Eine andere vorteilhafte Ausführungsform sieht allerdings vor, dass das Umlenkelement bei der Vorstellbewegung durch das Steuerelement auslenkbar ist. D.h., das Umlenkelement weist einen - translatorischen oder rotatorischen - Freiheitsgrad auf, der mit der o.g. Kraft übereinstimmt. Die entsprechende Kraft führt zu einer Verstellung des Umlenkelements gegenüber dem zweiten Maschinenteil. Insgesamt kann man von einer wechselseitigen Verstellung von Umlenkelement und Steuerelement sprechen.

Bevorzugt ist das Umlenkelement durch ein elastisches Federelement in Richtung auf eine Ruheposition vorgespannt. D.h., wenn keine sonstigen Kräfte auf das Umlenkelement wirken, wird es durch das Federelement in die Ruheposition zurückgeführt oder in dieser gehalten. Somit ist sichergestellt, dass sich das Umlenkelement in einer definierten Position befindet, wenn das Steuerelement mit ihm in Kontakt gerät. Das Federelement kann z.B. als Blattfeder oder Schraubenfeder ausgebildet sein. Es sind Ausgestaltungen denkbar, bei denen das Federelement einstückig mit dem Umlenkelement ausgebildet ist. Z.B. könnte das Umlenkelement aus Federstahl gefertigt sein, wobei ein Abschnitt nach Art einer Blattfeder ausgebildet ist und so als Federelement fungiert. Die Federkonstante des Federelements kann vorteilhaft so gewählt werden, dass sie zwar ein effektives Rückstellen in die Ruheposition erlaubt, aber andererseits so gering ist, dass sie ein Auslenken des Umlenkelements durch das Steuerelement nur unwesentlich behindert. Sofern das um Lenkerelement als Umlenkhebel ausgebildet ist, kann das Federelement bevorzugt mit dem o.g. Führungsarm verbunden sein.

Eine Ausgestaltung sieht vor, dass das Umlenkelement eine in der Ruheposition gegenüber der Verstellrichtung geneigte, wenigstens anteilig rückwärts weisende erste Umlenkfläche aufweist, welche zum Zusammenwirken mit dem Steuerelement bei der Vorstellbewegung ausgebildet ist, sowie eine in der Ruheposition gegenüber der Verstellrichtung geneigte, wenigstens anteilig vorwärts weisende zweite Umlenkfläche, welche zum Zusammenwirken mit dem Steuerelement bei der Rückstellbewegung ausgebildet ist. Bei der Vorstellbewegung kommt das Steuerelement mit der ersten Umlenkfläche in Kontakt und die Kraftübertragung zwischen Umlenkelement und Steuerelement erfolgt über die erste Umlenkfläche. Bei der Rückstellbewegung kommt das Steuerelement mit der zweiten Umlenkfläche in Kontakt und die Kraftübertragung zwischen Umlenkelement und Steuerelement erfolgt über die zweite Umlenkfläche. Bevorzugt ist die zweite Umlenkfläche gegenüber der ersten Umlenkfläche nach vorne versetzt angeordnet. Da das Steuerelement bei dieser Ausführungsform bei der Vorstellbewegung mit einer anderen Umlenkfläche zusammenwirkt als bei der Rückstellbewegung, kann durch die Geometrie und Ausrichtung der jeweiligen Umlenkfläche die Wechselwirkung zwischen Umlenkelement und Steuerelement vorteilhaft beeinflusst werden. Die erste Umlenkfläche weist, bezogen auf die Ruheposition, wenigstens anteilig rückwärts, also nach hinten. Die zweite Umlenkfläche weist, bezogen auf die Ruheposition, wenigstens anteilig vorwärts. Jede der Umlenkflächen kann bereichsweise unterschiedlich ausgerichtet sein, also z.B. gekrümmt oder abgewinkelt ausgebildet sein.

Bevorzugt weist in der Ruheposition die erste Umlenkfläche eine stärkere Neigung gegenüber der Verstellrichtung auf als die zweite Umlenkfläche. D.h. bei einer Schwenkverbindung ist die erste Umlenkfläche stärker gegenüber der tangentialen Richtung geneigt als die zweite Umlenkfläche. Beispielsweise kann die erste Umlenkfläche um über 45° gegenüber der Verstellrichtung (z.B. der tangentialen Richtung) geneigt sein, während die zweite Umlenkfläche um weniger als 45° geneigt ist. Wenn das Steuerelement in Kontakt mit dem Umlenkelement kommt, während sich dieses in der Ruheposition befindet, kann durch diese Ausrichtung der beiden Umlenkflächen die wechselseitige Auslenkung von Umlenkelement und Steuerelement vorteilhaft beeinflusst werden. Soweit Reibungskräfte eine eher untergeordnete Rolle spielen, wirkt auf das Umlenkelement jeweils eine Kraft senkrecht zur jeweiligen Umlenkfläche. Beim Verstellen in Verstellrichtung führt der Kontakt zwischen Steuerelement und erster Umlenkfläche somit zu einer vergleichsweise starken Kraftkomponente in Verstellrichtung, die z.B. im Falle eines Umlenkhebels diesen in Auslenkrichtung nach außen aufrichten kann. Somit kann der Umlenkhebel das Steuerelement optimal in den zweiten Steuerzustand führen. Beim Verstellen in Gegenrichtung führt der Kontakt zwischen Steuerelement und zweiter Umlenkfläche zu einer vergleichsweise starken nach innen wirkenden Kraftkomponente, die im Falle eines Umlenkhebels diesen entgegen der Auslenkrichtung nach innen absenken kann, so dass er dem Steuerelement ausweicht. Somit behindert der Umlenkhebel den Übergang des Steuerelements in den ersten Steuerzustand nicht oder nur geringfügig. Im Übergangsbereich zwischen den beiden Umlenkflächen kann das Umlenkelement eine vorspringende Nase aufweisen. An dieser Nase kann die Neigung der ersten Umlenkfläche gegenüber einem benachbarten Bereich zunehmen. Hierdurch wird es dem Steuerelement erschwert, die Nase zu überwinden, also über diese hinwegzugleiten.

Vorteilhaft ist in der Ruheposition die erste Umlenkfläche gegenüber der Umlenkhebel-Schwenkachse nach hinten versetzt angeordnet. Diese Ausgestaltung ist insbesondere in Kombination mit der oben beschriebenen Neigung der ersten Umlenkfläche vorteilhaft. Wenn das Steuerelement mit der ersten Umlenkfläche in Kontakt kommt, wird die oben beschriebene Kraftkomponente in Verstellrichtung erzeugt, die zusammen mit der nach hinten versetzten Anordnung der ersten Umlenkfläche gegenüber der Umlenkhebel-Schwenkachse zu einem Aufrichten des Umlenkhebels führt, bei welchem sich die erste Umlenkfläche, anteilig in Auslenkrichtung nach außen bewegt. Zusammen mit der ersten Umlenkfläche bewegt sich auch das Steuerelement anteilig in Auslenkrichtung nach außen und somit in Richtung auf den zweiten Steuerzustand.

Bevorzugt sind das Umlenkelement und das Steuerelement derart ausgebildet, dass das Umlenkelement bei der Vorstellbewegung durch das Steuerelement aus der Ruheposition in eine Auslenkposition auslenkbar ist, wodurch die erste Umlenkfläche nach außen ausgelenkt wird und das Steuerelement in den zweiten Steuerzustand verstellt wird. D.h. bei dieser Ausgestaltung erfolgt eine wechselseitige Auslenkung von Umlenkelement und Steuerelement. Das Steuerelement erfasst bei der Vorstellbewegung das Umlenkelement, welches sich zunächst in der Ruheposition befindet, und lenkt es in die Auslenkposition aus. Dabei wird die erste Umlenkfläche, mit welcher das Steuerelement zusammenwirkt, nach außen ausgelenkt. Durch den fortbestehenden Kontakt wird auch das Steuerelement ausgelenkt und in den zweiten Steuerzustand verstellt.

Gemäß einer Ausgestaltung sind das Steuerelement und das Umlenkelement derart ausgebildet, dass sie durch Überschreiten der Auslenkposition des Umlenkelements voneinander lösbar sind, um eine Rückkehr des Umlenkelements in die Ruheposition zu ermöglichen. Dies bezieht sich auf die Vorstellbewegung. Das Umlenkelement und das Steuerelement kommen zunächst in Kontakt miteinander und wirken zusammen, wodurch das Steuerelement in den zweiten Steuerzustand verstellt wird, während das Umlenkelement in die Auslenkposition ausgelenkt wird. Überschreitet das Umlenkelement allerdings die Auslenkposition, verlieren die beiden Elemente den Kontakt miteinander. Dies kann bspw. dadurch erfolgen, dass das Steuerelement vom Umlenkelement abgeleitet. In jedem Fall lösen sich die beiden Elemente voneinander und wechselwirken somit nicht mehr. Hierdurch wird ermöglicht, dass das Umlenkelement entsprechend der Wirkung des Federelements in die Ruheposition zurückkehren kann. Das Steuerelement wird nach dem Lösen vom Umlenkelement durch das Kurvenbahnelement geführt und kann bevorzugt durch den vorderen Bahnabschnitt weiter geführt werden.

In einigen Ausführungsformen könnte das Umlenkelement in der Ruheposition derart angeordnet sein, dass es bei der Rückstellbewegung nicht oder nur unwesentlich mit dem Steuerelement wechselwirkt. Insbesondere müsste die Wechselwirkung in diesem Fall so gering sein, dass das Steuerelement im ersten Steuerzustand verbleibt. Eine andere Ausgestaltung sieht vor, dass das Steuerelement dazu eingerichtet ist, bei der Rückstellbewegung das Umlenkelement aus der Ruheposition in eine Ausweichposition zu verstellen, wodurch die zweite Umlenkfläche nach innen ausgelenkt wird. Diese Ausführungsform kann insbesondere die oben beschriebene Neigung der zweiten Umlenkfläche ausnutzen, um eine auslenkende Kraftkomponente auf das Umlenkelement zu erzeugen. Die Auslenkung der zweiten Umlenkfläche verläuft entgegen der Auslenkungsrichtung nach innen. Hierdurch wird zumindest eine wesentliche Auslenkung des Steuerelements nach außen verhindert.

Die Aufgabe wird auch gelöst durch eine Schaltanordnung für eine Landmaschine, mit einem ersten Maschinenteil sowie einem zweiten Maschinenteil, wobei die Maschinenteile in einer Verstellrichtung gegeneinander verstellbar sind und wobei der zweite Maschinenteil ein Kurvenbahnelement aufweist, mit einem hinteren Bahnabschnitt und einem demgegenüber in Verstellrichtung vorderen Bahnabschnitt, der in einer zur Verstellrichtung senkrechten Auslenkrichtung nach außen gegenüber dem hinteren Bahnabschnitt vorspringt, wobei am ersten Maschinenteil eine Schalteinheit angeordnet ist, mit einem Steuerelement, das gegenüber dem ersten Maschinenteil zwischen einem ersten Steuerzustand und einem zweiten Steuerzustand verstellbar ist, wobei die Steuerzustände unterschiedlichen Schaltzuständen der Schalteinheit entsprechen, und wobei bei einer Rückstellbewegung der Maschinenteile das Steuerelement rückwärts entlang des vorderen Bahnabschnitts im zweiten Steuerzustand führbar ist und nachfolgend entlang des hinteren Bahnabschnitts im ersten Steuerzustand führbar ist, so dass ein Übergang zum ersten Steuerzustand erfolgt, wenn das zweite Maschinenteil relativ zum ersten Maschinenteil in einem Kurvenbahn-Schaltbereich angeordnet ist.

Erfindungsgemäß ist am zweiten Maschinenteil ein gegenüber dem Kurvenbahnelement verstellbares Umlenkelement angeordnet, welches dazu eingerichtet ist, bei einer zur Rückstellbewegung entgegengesetzten Vorstellbewegung das Steuerelement derart auszulenken, dass ein Übergang zum ersten Steuerzustand erfolgt, wenn das zweite Maschinenteil relativ zum ersten Maschinenteil in einem Umlenkungs-Schaltbereich angeordnet ist, welcher gegenüber dem Kurvenbahn-Schaltbereich versetzt ist.

Die genannten Begriffe wurden bereits oben mit Bezug auf die erfindungsgemäße Landmaschine erläutert und werden daher nicht nochmals erklärt. Vorteilhafte Ausgestaltungen der erfindungsgemäßen Schaltanordnung entsprechen denen der erfindungsgemäßen Landmaschine.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Rückansicht einer erfindungsgemäßen Landmaschine mit einem Bearbeitungsorgan in einer Bearbeitungsposition;
- Fig. 2: eine Rückansicht der Landmaschine aus Fig.1 mit dem Bearbeitungsorgan in einer Vorgewendeposition;
- Fig. 3: eine perspektivische Ansicht einer erfindungsgemäßen Schalteinheit der Landmaschine aus Fig.1;
- Fig. 4: eine Seitenansicht der Schalteinheit aus Fig.3; sowie
- Fig.5A-5F: Seitenansichten der Schalteinheit aus Fig.3 in verschiedenen Zuständen.

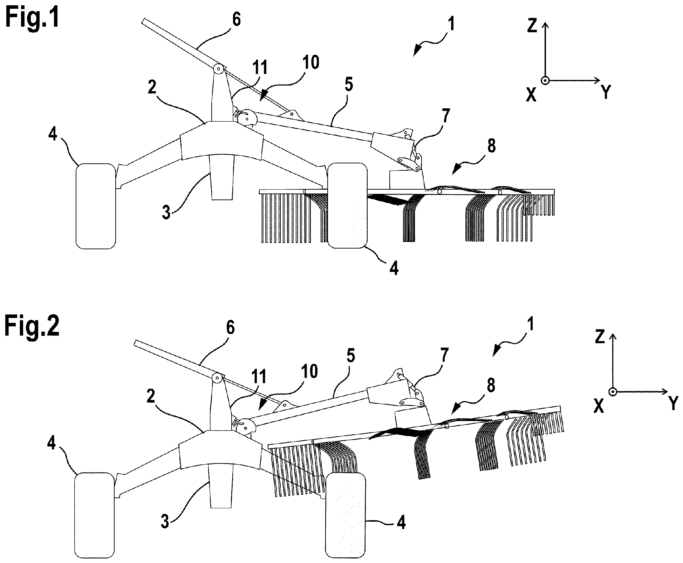

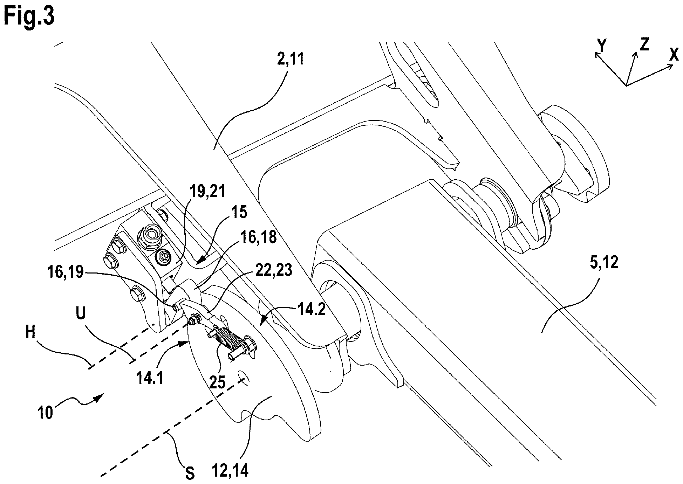

Fig. 1 und 2 zeigen Rückansichten einer Landmaschine 1, die hier als Kreiselschwader ausgebildet ist. Hier und in den weiteren Figuren sind eine Längsachse X, eine Querachse Y sowie eine Hochachse Z der Landmaschine 1 eingezeichnet. Die Landmaschine 1 weist einen Hauptrahmen 2 auf, an dem eine Deichsel 3 zur Kopplung an ein nicht dargestelltes Zugfahrzeug befestigt ist. Außerdem sind am Hauptrahmen 2 zwei Räder eines Fahrwerks 4 aufgehängt. Ein Auslegerarm oder Tragarm 5 ist mit dem Hauptrahmen 2 verbunden. An diesem Tragarm 5 wiederum ist ein Bearbeitungsorgan 8 aufgehängt, welches als Rechkreisel ausgebildet ist. Mittels eines Rahmenaktors 6, der in diesem Beispiel als Hydraulikaktor ausgebildet ist, kann der Tragarm 5 gegenüber dem Hauptrahmen 2 um eine Maschinenteil-Schwenkachse S geschwenkt werden. Hierdurch kann der Tragarm 5 mit dem Bearbeitungsorgan 8 aus einer in Fig. 1 dargestellten Bearbeitungsposition in eine in Fig. 2 dargestellte Vorgewendeposition verstellt werden. Außerdem kann das Bearbeitungsorgan 8 mittels eines Armaktors 7 gegenüber dem Tragarm 5 geschwenkt werden. Dies dient vornehmlich dazu, einen Bodenkontakt des Bearbeitungsorgans 8 beim Verstellen zwischen der Bearbeitungsposition und der Vorgewendeposition zu verhindern. Aufgrund verschiedener Einflüsse, insbesondere der auf das Bearbeitungsorgan 8 wirkenden Gewichtskraft, Trägheitskräften, sowie unterschiedlicher Hydraulikdrücke in den Aktoren 6, 7, ist es vorteilhaft, wenn der Armaktor 7 beim Aufwärtsschwenken einerseits und beim Abwärtsschwenken andererseits bei unterschiedlichen Schwenkwinkeln des Tragarms 5 aktiviert wird. Dies wird mittels einer erfindungsgemäßen Schaltanordnung 10 erreicht, welche nachfolgend mit Bezug auf die Figuren 3 bis 5F erläutert wird.

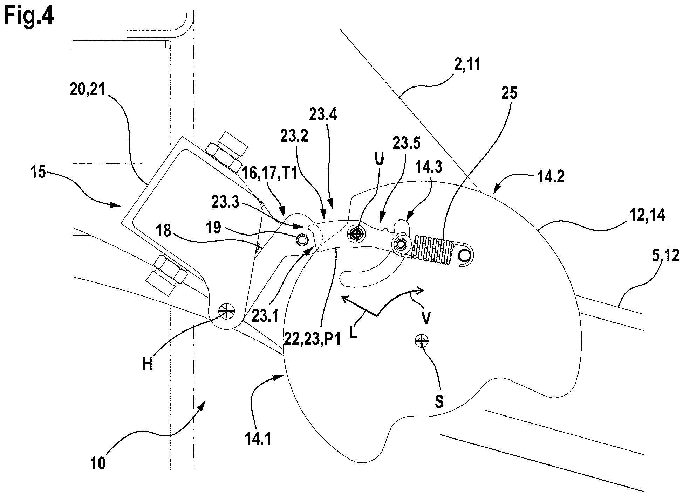

Die Schaltanordnung 10 weist einen ersten Maschinenteil 11 auf, welcher zum Hauptrahmen 2 gehört, sowie einen zweiten Maschinenteil 12, der den Tragarm 5 aufweist. Die beiden Maschinenteile 11, 12 sind wie bereits erläutert um die Maschinenteil-Schwenkachse S schwenkbar miteinander verbunden. Hierdurch wird eine in Fig. 3 eingezeichnete Verstellrichtung V definiert, die der tangentialen Richtung bezüglich der Maschinenteil-Schwenkachse S entspricht. Des Weiteren ist in Fig. 3 eine senkrecht zur Verstellrichtung V und somit radial bezüglich der Maschinenteil-Schwenkachse S verlaufende Auslenkrichtung L eingezeichnet. Der zweite Maschinenteil 12 weist ein Kurvenbahnelement 14 auf, das drehfest mit dem Tragarm 5 verbunden ist. Das Kurvenbahnelement 14 weist einen bezüglich der Verstellrichtung V hinteren Bahnabschnitt 14.1 sowie einen diesbezüglich vorderen Bahnabschnitt 14.2 auf. Letzterer ist bezüglich der Auslenkrichtung L nach außen versetzt. Mit dem Kurvenbahnelement 14 wirkt ein als Steuerhebel 17 ausgebildetes Steuerelement 6 zusammen. Der Steuerhebel 17 ist um eine Steuerhebel-Schwenkachse H, die parallel zur Maschinenteil-Schwenkachse S verläuft, schwenkbar mit dem ersten Maschinenteil 11 verbunden. Er weist einen Hauptabschnitt 18 auf, der mit dem Kurvenbahnelement 14 zusammenwirkt, sowie einen hier von abragenden Seitenabschnitt 19, dessen Funktion nachfolgend noch erläutert wird. Der Steuerhebel 17 wirkt außerdem mit einem als Schaltelement 20 fungierenden Hydraulikventil 21 zusammen, genauer gesagt mit einem Stößel (ohne Bezugszeichen) des Hydraulikventils 21. Dabei bilden das Steuerelement 16 und das Schaltelement 20 Teile einer Schalteinheit 15. Solange der Steuerhebel 17 wie in Fig. 3 und 4 dargestellt, am hinteren Bahnabschnitt 14.1 geführt ist, befindet er sich in einem ersten Steuerzustand T1. Dabei ist der Stößel des Hydraulikventils 21 ausgefahren, wodurch der Armaktor 7 eingefahren ist und das Bearbeitungsorgan 8 in der in Fig. 1 gezeigten Position relativ zum Tragarm 5 verbleibt. Gelangt der Steuerhebel 17 allerdings durch eine Vorstellbewegung BV der Maschinenteile 11, 12 in Eingriff mit dem vorderen Bahnabschnitt 14.2, wird er nach außen in einen zweiten Steuerzustand T2 ausgelenkt. Hierdurch wird der Stößel des Hydraulikventils 21 eingefahren, wodurch der Armaktor 7 ausgefahren wird und das Bearbeitungsorgan 8 in die in Fig. 2 gezeigte Position relativ zum Tragarm 5 verstellt wird.

Die Schalteinheit 15 weist außerdem ein als Umlenkhebel 23 ausgebildetes Umlenkelement 22 auf, das um eine Umlenkhebel-Schwenkachse U schwenkbar mit dem Kurvenbahnelement 14 verbunden ist. Auf einer Seite der Umlenkhebel-Schwenkachse U ist ein Umlenkarm 23.4 des Umlenkhebels 23 ausgebildet, während auf der gegenüberliegenden Seite ein Führungsarm 23.5 ausgebildet ist. Letzterer ist in einem kreisbogenförmigen Führungsschlitz 14.3 des Kurvenbahnelements 14 geführt. Außerdem ist er über ein als Schraubenfeder ausgebildetes Federelement 25 mit dem Kurvenbahnelement 14 verbunden. Durch die Wirkung des Federelements 25 ist der Umlenkhebel 23 in Richtung auf eine in Fig. 3 und 4 dargestellte Ruheposition P1 vorgespannt. Am Umlenkarm 23.4 sind eine rückwärtig angeordnete erste Umlenkfläche 23.1 sowie eine vorne angeordnete zweite Umlenkfläche 23.2 ausgebildet. In der Ruheposition P1 weist die erste Umlenkfläche 23.1 eine stärkere Neigung gegenüber der Verstellrichtung V (also der tangentialen Richtung) auf als die zweite Umlenkfläche 23.2. Im gezeigten Beispiel beträgt die Neigung der erste Umlenkfläche 23.1 durchgehend über 45°, während die Neigung der zweiten Umlenkfläche 23.2 durchgehend unter 45° liegt. Insbesondere ist am Übergang zwischen den Umlenkfläche 23.1, 23.2 eine vorspringende Nase 23.3 ausgebildet, an welcher die Neigung der ersten Umlenkfläche 23.1 maximal ist. Dort verläuft die erste Umlenkfläche 23.1 annähernd senkrecht zur Verstellrichtung V und parallel zur Auslenkrichtung L (also zur radialen Richtung).

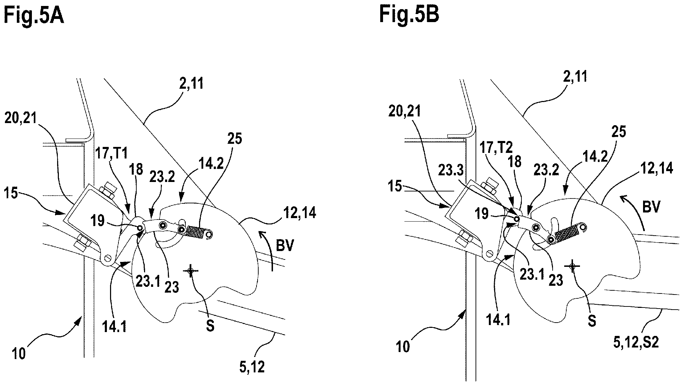

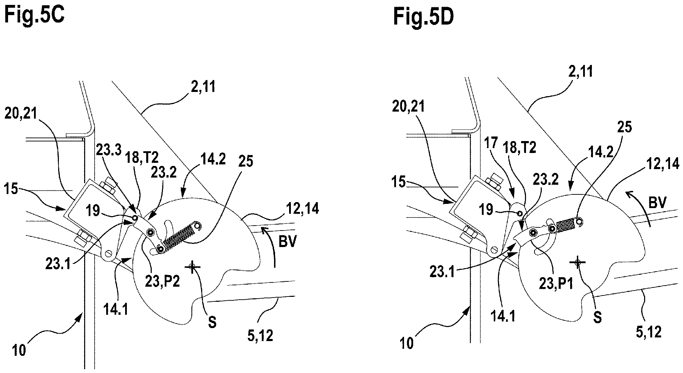

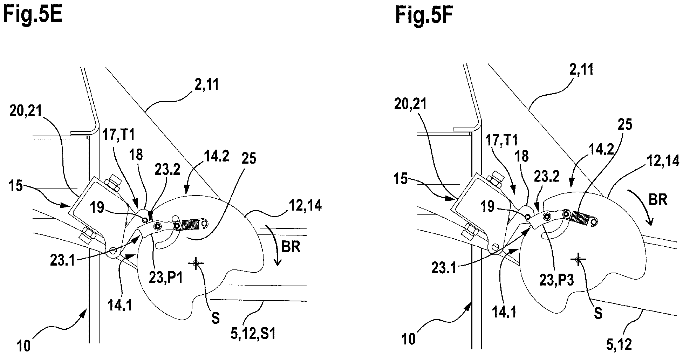

Der Bewegungsablauf und die Funktionsweise der Schaltanordnung 10 werden nun anhand von Fig. 5A bis 5F beschrieben. Fig. 5A entspricht dabei Fig. 4, wobei hier sowie in den folgenden Figuren verschiedene Bezugszeichen aus Gründen der Übersichtlichkeit weggelassen wurden. Der in Fig. 5A gezeigte Zustand entspricht der Arbeitsposition gemäß Fig. 1. Erreicht die Landmaschine 1 ein Vorgewende, wird der Rahmenaktor 6 eingefahren, wodurch der Tragarm 5 aufwärts geschwenkt wird. Aus der entsprechenden Vorstellbewegung BV der beiden Maschinenteile 11, 12 resultiert eine Relativbewegung des Kurvenbahnelement 14 sowie des Steuerhebels 17 zueinander. Letzterer befindet sich zunächst im ersten Steuerzustand T1. Durch die Bewegung gerät der Seitenabschnitt 19 des Steuerhebels 17 in Kontakt mit der ersten Umlenkfläche 23.1. Da die erste Umlenkfläche 23.1 die oben beschriebene Neigung gegenüber der Verstellrichtung V aufweist, kann der Seitenabschnitt 19 nicht über den Umlenkhebel 23 hinweggleiten, sondern es kommt zu einer gegenseitigen Auslenkung. Diese wird auch dadurch unterstützt, dass die erste Umlenkfläche 23.1 in der Ruheposition P1 gegenüber der Umlenkhebel-Schwenkachse U rückwärtig versetzt angeordnet ist. Es resultiert eine Verstellung des Umlenkhebels 23, bei welcher er sich wie in Fig. 5B dargestellt aufrichtet und die erste Umlenkfläche 23.1 zusammen mit dem Steuerhebel 17 nach außen ausgelenkt wird. Noch bevor der Hauptabschnitt 18 in Kontakt mit dem vorderen Bahnabschnitt 14.2 gelangen kann, wird der Steuerhebel 17 daher in einem Umlenkung-Schaltbereich S2 in den zweiten Steuerzustand T2 versetzt. Der Übergang in den zweiten Schaltzustand T2 erfolgt, wenn der zweite Maschinenteil 11 gegenüber dem ersten Maschinenteil 12 in einem Umlenkungs-Schaltbereich S2 angeordnet ist. Fig.5B zeigt dabei das Ende des Übergangs in den zweiten Steuerzustand T2. Die Nase 23.3 verhindert ein Abgleiten des Seitenabschnitts 19 vom Umlenkhebel 23, bis letzterer eine in Fig. 5C dargestellte Auslenkungsposition P2 erreicht. Wird diese überschritten, löst sich der Steuerhebel 17 vom Umlenkhebel 23. Zu diesem Zeitpunkt befindet sich der Hauptabschnitt 18 allerdings bereits in einer Position, in welcher er durch den vorderen Bahnabschnitt 14.2 gestützt und geführt werden kann, wie in Fig. 5D dargestellt ist. Somit verbleibt er im zweiten Steuerzustand T2. Aufgrund der Wirkung des Federelements 25 wird der Umlenkhebel 23 in die Ruheposition P1 zurückgezogen.

Wird der Tragarm 5 beim Zurückstellen in die Arbeitsposition abwärts geschwenkt, entspricht dies einer Rückstellbewegung BR der Maschinenteile 11, 12, bei welcher sich der Steuerhebel 17 relativ zum Kurvenbahnelement 14 rückwärts bewegt. Zu Anfang der Bewegung ist der Steuerhebel 17 über den Hauptabschnitt 18 noch am vorderen Bahnabschnitt 14.2 geführt, ähnlich wie in Fig. 5D gezeigt. Beim Übergang vom vorderen Bahnabschnitt 14.2 zum hinteren Bahnabschnitt 14.1 wird der Steuerhebel 17 nach innen in den ersten Steuerzustand T1 verstellt. Dieser Übergang erfolgt allerdings nicht, wenn der zweite Maschinenteil 12 im Umlenkung-Schaltbereich S2 ist, sondern in einem Kurvenbahn-Schaltbereich S1, der zum Umlenkung-Schaltbereich S2 versetzt ist. Beim Erreichen des hinteren Bahnabschnitts 14.1 ist der Seitenabschnitt 19 zunächst noch vom Umlenkhebel 23 beabstandet. Durch die Fortsetzung der Rückstellbewegung BR kommt es zum Kontakt zwischen dem Seitenabschnitt 19 und der zweiten Umlenkfläche 23.2. Da diese wie oben beschrieben eine relativ geringe Neigung gegenüber der Verstellrichtung V aufweist, kann der Steuerhebel 17 mit dem Seitenabschnitt 19 vergleichsweise leicht über die zweite Umlenkfläche 23.2 hinweggleiten, ohne den ersten Steuerzustand T1 zu verlassen. Dabei erfolgt allerdings eine Auslenkung des Umlenkhebels 23, wobei sich die zweite Umlenkfläche 23.2 nach innen bewegt. Hierdurch erreicht der Umlenkhebel 23 die in Fig. 5F dargestellte Ausweichposition P3. Beim weiteren Verstellen der Maschinenteile 11, 12 gegeneinander passiert der Seitenabschnitt 19 den Umlenkhebel 23 vollständig und gelangt wieder in die in Fig. 5A gezeigte Position. Durch die Wirkung des Federelements 25 kehrt der Umlenkhebel 23 in die Ruheposition P1 zurück.

## Patentansprüche

1. Landmaschine (1), aufweisend eine Schaltanordnung (10) mit einem ersten Maschinenteil (11) sowie einem zweiten Maschinenteil (12), wobei die Maschinenteile (11, 12) in einer Verstellrichtung (V) gegeneinander verstellbar sind und wobei der zweite Maschinenteil (12) ein Kurvenbahnelement (14) aufweist, mit einem hinteren Bahnabschnitt (14.1) und einem demgegenüber in Verstellrichtung (V) vorderen Bahnabschnitt (14.2), der in einer zur Verstellrichtung (V) senkrechten Auslenkrichtung (L) nach außen gegenüber dem hinteren Bahnabschnitt (14.1) vorspringt, wobei am ersten Maschinenteil (11) eine Schalteinheit (15) angeordnet ist, mit einem Steuerelement (16), das gegenüber dem ersten Maschinenteil (11) zwischen einem ersten Steuerzustand (T1) und einem zweiten Steuerzustand (T2) verstellbar ist, wobei die Steuerzustände (T1, T2) unterschiedlichen Schaltzuständen der Schalteinheit (15) entsprechen, und wobei bei einer Rückstellbewegung (BR) der Maschinenteile (11, 12) das Steuerelement (16) rückwärts entlang des vorderen Bahnabschnitts (14.2) im zweiten Steuerzustand (T2) führbar ist und nachfolgend entlang des hinteren Bahnabschnitts (14.1) im ersten Steuerzustand (T1) führbar ist, so dass ein Übergang zum ersten Steuerzustand (T1) erfolgt, wenn das zweite Maschinenteil (12) relativ zum ersten Maschinenteil (11) in einem Kurvenbahn-Schaltbereich (S1) angeordnet ist, **dadurch gekennzeichnet, dass**
am zweiten Maschinenteil (12) ein gegenüber dem Kurvenbahnelement (14) verstellbares Umlenkelement (22) angeordnet ist, welches dazu eingerichtet ist, bei einer zur Rückstellbewegung (BR) entgegengesetzten Vorstellbewegung (BV) das Steuerelement (16) derart auszulenken, dass ein Übergang zum ersten Steuerzustand (T1) erfolgt, wenn das zweite Maschinenteil (12) relativ zum ersten Maschinenteil (11) in einem Umlenkungs-Schaltbereich (S2) angeordnet ist, welcher gegenüber dem Kurvenbahn-Schaltbereich (S1) versetzt ist.

2. Landmaschine nach Anspruch 1, **dadurch gekennzeichnet, dass** der zweite Maschinenteil (12) gegenüber dem ersten Maschinenteil (11) um eine Maschinenteil-Schwenkachse (S) schwenkbar ist, wobei die Verstellrichtung (V) tangential und die Auslenkrichtung (L) radial bezüglich der Maschinenteil-Schwenkachse (S) verläuft.

3. Landmaschine nach einem der vorangehenden Ansprüche, **dadurch gekennzeichnet, dass** einer der Maschinenteile (11, 12) wenigstens einen Teil eines Hauptrahmen (2) der Landmaschine (1) aufweist und der andere Maschinenteil (11, 12) wenigstens einen Teil eines Tragarms (5) aufweist, welcher zum Tragen wenigstens eines Bearbeitungsorgans (8) ausgebildet ist, wobei die Schaltanordnung (10) bevorzugt wenigstens einen über die Schalteinheit (15) ansteuerbaren Aktor (7) zum Verstellen des Bearbeitungsorgans (8) gegenüber dem Tragarm (5) aufweist.

4. Landmaschine nach einem der vorangehenden Ansprüche, **dadurch gekennzeichnet, dass** die Schalteinheit (15) ein Schaltelement (20) aufweist, mit welchem das Steuerelement (16) in wenigstens einem der Steuerzustände (T1, T2) zusammenwirkt und welches bevorzugt als Hydraulikventil (21), Pneumatikventil oder elektrischer Schalter ausgebildet ist.

5. Landmaschine nach einem der vorangehenden Ansprüche, **dadurch gekennzeichnet, dass** das Umlenkelement (22) quer zur Verstellrichtung (V) gegenüber dem Kurvenbahnelement (14) versetzt angeordnet ist und das Steuerelement (16) einen Hauptabschnitt (18) zum Zusammenwirken mit dem Kurvenbahnelement (14) aufweist sowie einen Seitenabschnitt (19), welcher quer zur Verstellrichtung (V) vom Hauptabschnitt (18) abragt und zum Zusammenzuwirken mit dem Umlenkelement (22) eingerichtet ist.

6. Landmaschine nach einem der vorangehenden Ansprüche, **dadurch gekennzeichnet, dass** das Umlenkelement (22) als Umlenkhebel (23) ausgebildet ist, welcher um eine Umlenkhebel-Schwenkachse (U) gegenüber dem zweiten Maschinenteil (12) schwenkbar ist, und/oder das Steuerelement (16) als Steuerhebel (17) ausgebildet ist, welcher um eine Steuerhebel-Schwenkachse (H) gegenüber dem ersten Maschinenteil (11) schwenkbar ist.

7. Landmaschine nach einem der vorangehenden Ansprüche, **dadurch gekennzeichnet, dass** das Umlenkelement (22) bei der Vorstellbewegung (BV) durch das Steuerelement (16) auslenkbar ist.

8. Landmaschine nach einem der vorangehenden Ansprüche, **dadurch gekennzeichnet, dass** das Umlenkelement (22) durch ein elastisches Federelement (25) in Richtung auf eine Ruheposition (P1) vorgespannt ist.

9. Landmaschine nach einem der vorangehenden Ansprüche, **dadurch gekennzeichnet, dass** das Umlenkelement (22) eine in der Ruheposition (P1) gegenüber der Verstellrichtung (V) geneigte, wenigstens anteilig rückwärts weisende erste Umlenkfläche (23.1) aufweist, welche zum Zusammenwirken mit dem Steuerelement (16) bei der Vorstellbewegung (BV) ausgebildet ist, sowie eine in der Ruheposition (P1) gegenüber der Verstellrichtung (V) geneigte, wenigstens anteilig vorwärts weisende zweite Umlenkfläche (23.2), welche zum Zusammenwirken mit dem Steuerelement (16) bei der Rückstellbewegung (BR) ausgebildet ist.

10. Landmaschine nach einem der vorangehenden Ansprüche, **dadurch gekennzeichnet, dass** in der Ruheposition (P1) die erste Umlenkfläche (23.1) eine stärkere Neigung gegenüber der Verstellrichtung (V) aufweist als die zweite Umlenkfläche (23.2).

11. Landmaschine nach einem der vorangehenden Ansprüche, **dadurch gekennzeichnet, dass** in der Ruheposition (P1) die erste Umlenkfläche (23.1) gegenüber der Umlenkhebel-Schwenkachse (U) nach hinten versetzt angeordnet ist.

12. Landmaschine nach einem der vorangehenden Ansprüche, **dadurch gekennzeichnet, dass** das Umlenkelement (22) und das Steuerelement (16) derart ausgebildet sind, dass das Umlenkelement (22) bei der Vorstellbewegung (BV) durch das Steuerelement (16) aus der Ruheposition (P1) in eine Auslenkposition (P2) auslenkbar ist, wodurch die erste Umlenkfläche (23.1) nach außen ausgelenkt wird und das Steuerelement (16) in den zweiten Steuerzustand (T2) verstellt wird.

13. Landmaschine nach einem der vorangehenden Ansprüche, **dadurch gekennzeichnet, dass** das Steuerelement (16) und das Umlenkelement (22) derart ausgebildet sind, dass sie durch Überschreiten der Auslenkposition (P2) des Umlenkelements (22) voneinander lösbar sind, um eine Rückkehr des Umlenkelements (22) in die Ruheposition (P1) zu ermöglichen.

14. Landmaschine nach einem der vorangehenden Ansprüche, **dadurch gekennzeichnet, dass** das Steuerelement (16) dazu eingerichtet ist, bei der Rückstellbewegung (BR) das Umlenkelement (22) aus der Ruheposition (P1) in eine Ausweichposition (P3) zu verstellen, wodurch die zweite Umlenkfläche (23.2) nach innen ausgelenkt wird.

15. Schaltanordnung (10) für eine Landmaschine (1), mit einem ersten Maschinenteil (11) sowie einem zweiten Maschinenteil (12), wobei die Maschinenteile (11, 12) in einer Verstellrichtung (V) gegeneinander verstellbar sind und wobei der zweite Maschinenteil (12) ein Kurvenbahnelement (14) aufweist, mit einem hinteren Bahnabschnitt (14.1) und einem demgegenüber in Verstellrichtung (V) vorderen Bahnabschnitt (14.2), der bezüglich einer zur Verstellrichtung (V) senkrechten Auslenkrichtung (L) gegenüber dem hinteren Bahnabschnitt (14.1) nach außen vorspringt, wobei am ersten Maschinenteil (11) eine Schalteinheit (15) angeordnet ist, mit einem Steuerelement (16), das gegenüber dem ersten Maschinenteil (11) zwischen einem ersten Steuerzustand (T1) und einem zweiten Steuerzustand (T2) verstellbar ist, wobei die Steuerzustände (T1, T2) unterschiedlichen Schaltzuständen der Schalteinheit (15) entsprechen, und wobei bei einer Rückstellbewegung (BR) der Maschinenteile (11, 12) das Steuerelement (16) rückwärts entlang des vorderen Bahnabschnitts (14.2) im zweiten Steuerzustand (T2) führbar ist und nachfolgend entlang des hinteren Bahnabschnitts (14.1) im ersten Steuerzustand (T1) führbar ist, so dass ein Übergang zum ersten Steuerzustand (T1) erfolgt, wenn das zweite Maschinenteil (12) relativ zum ersten Maschinenteil (11) in einem Kurvenbahn-Schaltbereich (S1) angeordnet sind, **dadurch gekennzeichnet, dass**
am zweiten Maschinenteil (12) ein gegenüber dem Kurvenbahnelement (14) verstellbares Umlenkelement (22) angeordnet ist, welches dazu eingerichtet ist, bei einer zur Rückstellbewegung (BR) entgegengesetzten Vorstellbewegung (BV) das Steuerelement (16) derart auszulenken, dass ein Übergang zum ersten Steuerzustand (T1) erfolgt, wenn das zweite Maschinenteil (12) relativ zum ersten Maschinenteil (11) in einem Umlenkungs-Schaltbereich (S2) angeordnet ist, welcher gegenüber dem Kurvenbahn-Schaltbereich (S1) versetzt ist.
